# EUROPEAN PATENT SPECIFICATION

(11) **EP 2 260 531 B1**
(45) Date of publication and mention of the grant of the patent: **16.10.2019**
(21) Application number: 09713877.0
(22) Date of filing: 26.02.2009
(51) Int. Cl.: H01M 8/0206, H01M 8/0228, C23C 28/00, C23C 28/02, C23C 28/04, C04B 35/565, H01M 8/1018

(54) **ELECTRODE WITH A COATING, METHOD IN PRODUCTION THEREOF AND USE OF A MATERIAL**
ELEKTRODE MIT EINER BESCHICHTUNG, VERFAHREN BEI IHRER HERSTELLUNG UND VERWENDUNG EINES MATERIALS
ÉLECTRODE AVEC UN REVÊTEMENT, PROCÉDÉ DE FABRICATION ASSOCIÉ ET UTILISATION D'UN MATÉRIAU

(30) Priority: 27.02.2008 SE 0800464; 27.02.2008 US 64295
(43) Date of publication of application: 15.12.2010
(73) Proprietor: Impact Coatings AB, 582 16 Linköping (SE)
(72) Inventor: LJUNGCRANTZ, Henrik, SE-587 21 Linköping (SE); ASTRÖM, Simon, SE-582 31 Linköping (SE); WÄLIVAARA, Bengt, SE-589 37 Linköping (SE); JOELSSON, Torbjörn, SE-584 22 Linköping (SE)
(74) Representative: Valea AB
(86) International application number: PCT/SE2009/000108
(87) International publication number: WO 2009/108102

(56) References cited:
- EP-A1- 1 777 769
- EP-A1- 1 978 583
- WO-A1-03/046247
- WO-A1-2006/049575
- WO-A2-2005/038985
- US-A1- 2006 169 404
- US-A1- 2007 117 003
- ZHU BIN ET AL: 'Study on the electrical and mechanical properties of polyvinylidene fluoride/titanium silicon carbide composite bipolar plates' JOURNAL OF POWER SOURCES vol. 161, no. 2, 2006, pages 997 - 1001, XP002487930
- DATABASE WPI Week 200816, Derwent Publications Ltd., London, GB; AN 2008-C08298, XP003025180 & CN 101 017 903 A (UNIV WUHAN TECHNOLOGY) 15 August 2007
- DATABASE WPI Week 200573, Derwent Publications Ltd., London, GB; AN 2005-705140, XP003025181 & CN 1 595 697 A (UNIV WUHAN TECHNOLOGY) 16 March 2005
- DATABASE WPI Week 200767, Derwent Publications Ltd., London, GB; AN 2007-709863, XP003025182 & CN 1 964 113 A (UNIV WUHAN TECHNOLOGY) 16 May 2007
- BARSOUM MICHAEL W ET AL: "The MaxPhase: Unique New Carbide and Nitride Materials", AMERICAN SCIENTIST, NEW HAVEN, CT, US, vol. 89, 1 August 2001 (2001-08-01), pages 334-343, XP008090225, ISSN: 0003-0996
- M. LI ET AL: "New M n +1AXn compounds by thermal explosion in the Al-Cr-Si-C system", INTERNATIONAL JOURNAL OF SELF-PROPAGATING HIGH-TEMPERATURESYNTHESIS, vol. 18, no. 4, 1 December 2009 (2009-12-01), pages 273-275, XP055370574, US ISSN: 1061-3862, DOI: 10.3103/S1061386209040074

## Description

### Technical field

The present invention relates to an electrode for an electrochemical cell, in particular a bipolar plate for a fuel cell, which electrode comprises an electrically conductive substrate and an electrically conductive corrosion resistant coating formed on said electrically conducting substrate, a method in production of such electrode, and an electrochemical cell comprising the electrode.

### Technical background

In the past, fuel cells have mostly been used when the advantages, e.g. availability or properties of the fuel (supply of hydrogen and oxygen), have overrode the costs. Today, however, fuel cells are, if not there yet, at least close, at commercial breakthrough in greater scale, owing to technological progress and the increasing awareness of environmental issues.

One fuel cell type is the Proton Exchange Membrane (PEM) fuel cell, or simply PEMFC, which comprises a membrane electrode assembly (MEA) which, in turn, typically comprises a polymer membrane as electrolyte sandwiched between two gas diffusion layers (usually carbon layers) which also contains catalytic particles (usually a noble metal such as platinum). Today, the most common membrane is Nafion®, but there are also other alternatives.

During operation of the PEMFC the carbon layers act as anode and cathode respectively. Fuel at the anode side (for example hydrogen) diffuse through the anode side carbon layer and reacts with the catalytic particles to form hydrogen cations (protons) which diffuse through the membrane to the cathode side. Fuel at the cathode side (for example air or any gas comprising oxygen) diffuse through the cathode side carbon layer and reacts with the catalytic particles to form oxygen anions. At the cathode the anions react with the cations and a reaction residual product, usually water, is formed. The reaction also results in heat and, of course, electrical energy.

The MEA is typically arranged between two electrically conductive plates, in contact with the anode and cathode respectively. The plates act as current collectors and are typically provided with flow channels in the surface to facilitate spreading of fuel over the surface to facilitate the catalyst. Since there in practice typically is arranged a stack of fuel cells to form an electrical series connection, the plates are typically arranged to connect the fuel cell elements of such stack, and thus one side of the plate act as anode for one fuel cell and the other side as cathode for the next fuel cell in the stack. The plates are therefore typically referred to and known as bipolar plates. Other names that may occur are flow plates or similar.

A number of desirable properties relates to the bipolar plates, these include low electrical resistance, light weight, thinness, corrosion resistance, stability under operative conditions and, of course, low cost. It has turned out that it is not very easy to find a material to meet up with all these properties. The corrosion resistance is a particular issue due to the harsh environment in the fuel cell, in the PEMFC a pH of typically about 2-3 and elevated temperatures of about 80 °C. In other types of fuel cells the temperature may be even higher and the environment more corrosive.

Graphite is one conventional material choice for bipolar plates and is non-corrosive, however, such plates are comparatively expensive, thick due to an insufficient structural stability of carbon and it is time-consuming to process the flow channels. Other alternatives include conducting plastic materials, for example comprising carbon particles, which can be made at low cost but has comparatively high electrical resistance and also suffer from being relatively thick. Noble metal plates can be made thin, conduct well, are highly corrosion-resistant and can be made thin at retained structural stability, but suffer from high cost and are therefore not seen as a commercially viable alternative.

Other metals typically suffer from either poor corrosion resistance or have improved corrosion resistance but to the cost of higher electrical resistance (typically owing to formation of oxide film).

Non-noble metals are still of interest for bipolar plates, owing to that they are suitable in almost every aspect except from the corrosion resistance. Hence there have been attempts to increase the corrosion resistance of metal based bipolar plates. Common for these solutions is the use of some kind of outer conducting layer arranged to protect an underlying metal core, or substrate, from corrosion. It is understood that the combination possibilities for such structures are vast. Of i.a. economical reasons, bipolar plates based on aluminum or stainless steel has drawn much attention and are currently considered to be the perhaps most promising alternatives. Below follows a number of proposed solutions in the prior art.

DE10017058A1 discloses a bipolar plate made from a first metal with a metallic coating of a second metal. The bulk material (core) of the plate is St37, aluminum or aluminum alloy. The metallic coating is made from gold, tin, a lead-tin alloy or tantalum optionally with additional metallic intermediate layers (e.g. copper or nickel). The metallic coating is applied by galvanic deposition or by sputtering.

US2007287057A discloses a stainless steel flow field plate that includes a layer of titanium or titanium oxide and a layer of titanium oxide/ruthenium oxide that makes the plate conductive and hydrophilic. Titanium is deposited on the surface of a stainless steel bipolar plate as a metal or an oxide using a suitable process, such as PVD or CVD. A solution of ruthenium chloride in ethanol is brushed on the titanium layer. The plate is then calcinated to provide a dimensionally stable titanium oxide/ruthenium oxide layer on the stainless steel that is hydrophilic and electrically conductive in the fuel cell environment.

US2004005502A describes a conductive component for electrochemical cells is described, in particular for use as a bipolar plate in a fuel cell. The conductive component consists of a metal part provided with a doped diamond coating and/or with a doped diamond-like carbon coating. The coating is asserted to enable the component to be produced at favorable cost and nevertheless to satisfy the twin requirements of good corrosion resistance and high conductivity. Methods for the manufacture of such a component by a CVD and/or by a PVD process are described as well. The metal part can be formed from titanium, stainless steel, steel, tin-plated steel, aluminum, magnesium, and/or an alloy thereof.

US 2007/0117003 describes a bipolar plate or flow field plate for a fuel cell that includes a carbide coating, which coating is polished or textured to make the coating more hydrophilic.

EP 1777769 discloses a fuel cell component having a coating thereon including binary and ternary nitrides and oxynitrides of elements of IVb and Vb groups of the periodic table of elements.

WO 2006/049575 discloses a metallic substrate, such as a fuel cell interconnect, with a coating of a MAX material type.

EP 1978583 discloses a metallic bipolar plate with a nanostructured coating.

WO 03/0465247 discloses the manufacturing of different MAX compositions.

### Summary of the invention

In view of the above, an object of this disclosure is to present a solution overcoming or at least alleviating problems in the prior art. A more specific object is to present an alternative solution to existing solutions regarding corrosion protection of bipolar plates for fuel cells, such as PEMFCs.

The invention is defined by the appended independent claims. Preferred embodiments are set forth in the dependent claims and in the following description and drawings.

Hence, according to a first aspect, there is provided an electrode for an electrochemical cell, comprising an electrically conductive substrate and an electrically conductive corrosion resistant coating formed on and at least partially covering said conducting substrate, wherein said coating comprises a multielement material.

According to a second aspect there is provided an electrochemical cell comprising the electrode.

According to a third aspect there is provided a method in manufacturing of the electrode, said method comprising the steps of providing an electrically conducting substrate and forming an electrically conductive corrosion resistant coating on said conducting substrate so that said conducting substrate become at least partially covered by said coating, wherein said coating comprises the multielement material.

The multielement material has a composition of at least one of a carbide or nitride described by the formula M_{q}A_{y}X_{z}, where M is a transition metal or a combination of transition metals, A is a group A element or a combination of group A elements, X is carbon or nitrogen or both, and z and q and y are numbers above zero, and that the multielement material further comprises at least one nanocomposite comprising single elements, binary phases, ternary phases, quaternary phases or higher order phases based on the atomic elements in the corresponding M_{q}A_{y}X_{z} compound.

A "nanocomposite" comprises two or more phases segregated on the nanoscale. The phases are crystals, regions and/or structures with a characteristic length scale above 0.1 nm and below 1000 nm. It should be noted that the phases need not be crystalline.

The multielement material may have a composition of at least one of a carbide or nitride described by the formula Mₙ₊₁AXₙ, where M is a transition metal or a combination of transition metals, A is a group A element or a combination of group A elements, X is carbon or nitrogen or both, and n is 1, 2, 3 or higher, and that the multielement material further comprises at least one nanocomposite comprising single elements, binary phases, ternary phases, quaternary phases or higher order phases based on the atomic elements in the corresponding Mₙ₊₁AXₙ compound.

With a coating as above, an electrode that is corrosion resistant and electrically conducting, also in the highly corrosive environment of electrochemical cells, can be achieved at a comparatively low cost.

The coating may comprises at least one single element M, A , X in the corresponding Mₙ₊₁AXₙ compound within a range of about 0-80% by weight, or about 0-70% by weight, or about 0-60% by weigh, or about 0-50% by weight.

The nanocomposite may comprise at least two phases chosen from the group consisting of M-A, A-X, M-A-X, X and M-X.

M is preferably Ni for improved corrosion resistance of the coating. A is preferably Si and X is preferably C.

Alternatively M may be titanium, X carbon and the group A element at least one of silicon, germanium or tin.

The multielement material may be Ti₃SiC₂ and the nanocomposite may comprise at least one phase chosen from the group consisting of Ti-C, Si-C, Ti-Si-C, Ti-Si and C.

The coating may further comprise a metallic layer. The metallic layer may be any one of Au, Ag, Pd, Pt, Rh, Ir, In, Sn, Re, Ru, Mo, W, Ni, or an alloy with at least one of any of the aforementioned metals.

The metallic layer may be any metal or metal composite where the composite can be an oxide, carbide, nitride or boride.

The metallic layer may be any metal or metal composite, the composite may comprise a polymer, an organic material or a ceramic material such as an oxide, carbide, nitride or boride.

In one embodiment the multielement material is laminated with metallic layers in a multilayer structure.

The multielement material may have a coating of the metallic layer such that the contact surface is metallic.

Furthermore, the coating may be doped by one or several compounds or elements for altering and improving at least one of the following: corrosion resistance, mechanical, thermal and electrical properties of the coating.

The coating may be doped by at least one of the following: Au, Re, Pd, Rh, Ir, Mo, W, Ag, Pt, Cu, In, Sn, Ni, Ta, Nb, Zr and Hf.

The nanocomposite is at least partially in an amorphous state, and/or the nanocomposite is at least partially in a nanocrystalline state.

The nanocomposite has amorphous regions mixed with nanocrystalline regions.

The electrically conducting substrate typically comprises a metal, which may be at least one of the following: stainless steel, aluminum and nickel, or an alloy thereof.

In the above method, the coating is formed by Physical Vapor Deposition (PVD), preferably by sputtering. The coating may be at least partially formed by High Power Impulse Magnetron Sputtering (HIPIMS). HIPIMS allows for reduced effect by the coating on the geometry of the electrode, e.g. regarding flow channels in the electrode, and also to decrease the risk of weak spots in the coating and thus provide even less risk for corrosion.

In one embodiment the coating is formed by forming a first sublayer on the substrate by HIPIMS and then forming a second sublayer on the first sublayer by another PVD method. This way a dense microstructure layer provided by HIPIMS can be continued by more conventional DC-sputtering, but at a higher deposition rate. Thus a dense coating can be provided at comparatively high rate.

The coating may be formed by sputtering under external heating at a temperature above a temperature caused by heating resulting from the PVD.

### Brief description of the drawings

The above, as well as other aspects, objects, features and advantages of the present invention, will be better understood through the following illustrative and non-limiting detailed description, with reference to the appended schematic drawings.

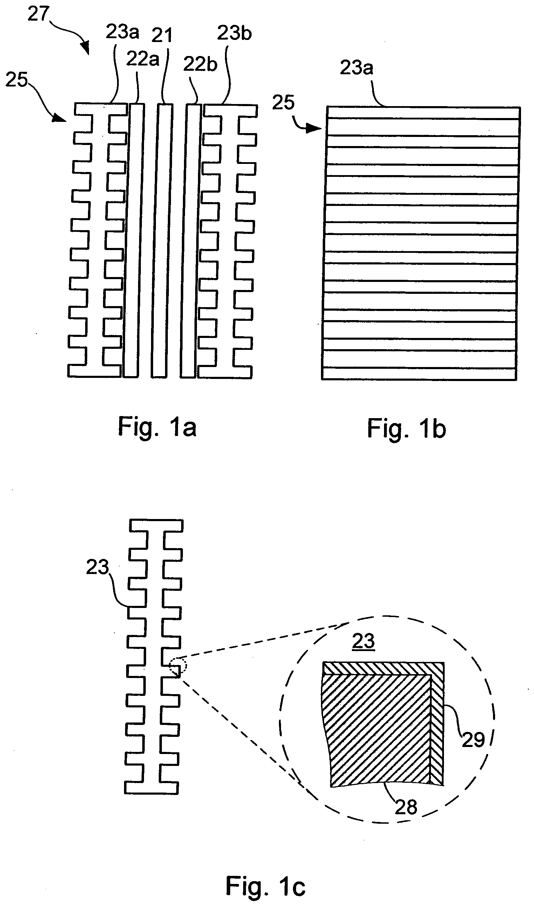

Fig. 1a schematically shows a side view of a fuel cell of PEM type.
Fig. 1b schematically shows a plane view of one of the bipolar plates of the fuel cell of Fig. 1a.
Fig. 1c schematically shows a side view of one of the bipolar plates of
Figs. 1a-b and a cross-sectional side view of a surface portion thereof.
Fig. 2 shows an example of a measurement curves from corrosion resistance measurements on an uncoated and a multielement Cr-Si-C coated stainless steel substrate.
Fig. 3a is a schematic view of the structure of a multielement material layer having nanocomposites with nanocrystals mixed with amorphous regions.
Fig. 3b is a schematic view of another structure of a multielement material layer having nanocrystals with nanocrystalline and amorphous layers, mixed with amorphous regions.
Fig. 3c is a schematic view of another structure of a multielement material layer with regions in a nanocrystalline state.
Fig. 4 is a schematic view of a multielement material layer and a metallic layer.
Fig. 5 is a schematic view of a multielement material layer laminated with metallic layers in a repeated structure.
Fig. 6 schematically shows a multielement material with regions in a nanocrystalline state coated with a metallic layer.
Fig. 7 schematically shows a multielement material with regions in a nanocrystalline state laminated with metallic layers in a repeated structure.

In the drawings the same reference numerals may be used for similar or corresponding elements, even when these are elements in different examples or embodiments. Dimensions and ratios in the schematic drawings have mainly been selected for presentational purposes and do not typically reflect true dimensions and ratios in real applications.

### Description of preferred embodiments

Fig. 1a shows a schematic side view of a fuel cell 27 of PEM-type for use in a fuel cell stack. The fuel cell comprises a membrane electrode assembly (MEA) which, in turn, comprises a polymer membrane 21 sandwiched between two gas diffusion layers 22a, 22b which contains catalytic particles. The MEA may be a conventional MEA. The gas diffusion layers 22a, 22b are in electrical contact with respective bipolar plates 23a, 23b. In fact, although not shown for presentational purposes in Fig.1, typically all elements 21, 22, 23 are in contact with the adjacent elements. Fig. 1b schematically shows a plane view of one of the bipolar plates 23a. The bipolar plates are provided with channels 25 on surfaces to be in contact with gas diffusion layers 22 to facilitate spreading of fuel. The bipolar plates 23a, 23b are shown with channels on both sides, which, although not shown in the figure, typically is the case when the bipolar plates 23a, 23b are arranged in a stack with MEAs on both sides of each bipolar plate. In a stack with only one fuel cell 27 it is typically sufficient with channels on only one side. Also, there may be situations when the function of the channels for spreading fuel is being provided by another part of the fuel cell, e.g an additional layer, and in such case the bipolar plate may not be provided with channels at all.

Fig. 1c schematically shows a cross section of a surface portion of one of the bipolar plates 23. The shown bipolar plate 23 has a conducting substrate, or core, 28 and a coating 29 that is formed on and covers said substrate 28. The conducting substrate 28 is typically a metal, preferably stainless steel, however, the substrate may be formed also of other metals, alloys thereof, or even non-metal conducting materials. In one embodiment the substrate 28 comprises an inner aluminum core covered by a layer of nickel, or nickel alloy. The coating 29 is an electrically conductive corrosion resistant coating that comprises a multielement material typically of at least one conducting phase and having a composition of at least one of a carbide or nitride described by the formula M_{q}A_{y}X_{z}, where M is a transition metal or a combination of transition metals, A is a group A element or a combination of group A elements, X is carbon or nitrogen or both, and z and at least one of q and y are numbers above zero, and that the multielement material further comprises at least one nanocomposite (4) comprising single elements, binary phases, ternary phases, quaternary phases or higher order phases based on the atomic elements in the corresponding M_{q}A_{y}X_{z} compound. Typically both q and y are numbers above zero.

A compound like this has previously been presented as a conducting, wear resistant and cost efficient alternative to gold on electrical contacts, see for example WO2005038985. The applicant has found out that this compound advantageously also may be used as an electrically conducting and corrosive resistant protective coating on bipolar plates of fuel cells. A coating comprising such multielement material has been found to make the bipolar plates less prone to degradation in the highly corrosive environment in the fuel cells without destroying the electrical conductivity and function of the bipolar plate.

Although the multielement material typically has a composition given by the general formula Mₙ₊₁AXₙ, where n is 1, 2, 3 or higher, the proportions of the different elements may vary, such that Mₙ₊₁ and Xₙ may vary from 1/10 up to 2 times of what the general formula specifies. Just as examples, the composition may be M₀.₂AX, M₀.₂AX₀.₁, M₄AX, or M₂AX₂, thus corresponding to the more general formula M_{q}A_{y}X_{z}, where q, y and z are numbers above zero.

Group A elements are the elements in group 13-15 of the periodic table (except C and N) including e.g. aluminum, silicon, phosphor, sulphur, gallium, germanium, arsenic, cadmium, indium, tin, thallium and lead. Transition metals are the forty elements in Groups 3-12 of the periodic table, including e.g. scandium, titanium, vanadium, chromium, zirconium, niobium, molybdenum, hafnium and tantalum. Mₙ₊₁AXₙ compounds are characterized by the number of transition metal layers separating the group A element layers. So called 211 compounds have two transition metal layers, 312 compounds have three transition metal layers and 413 compounds have four transition metal layers. Examples of 211 compounds, which are the most common, are Ti₂AlC, Ti₂AlN, Hf₂PbC, Nb₂AlC, (NbTi)₂AlC, Ti₂AlN₀,₅C₀,₅, Ti₂GeC, Zr₂SnC, Ta₂GaC, Hf₂SnC, Ti₂SnC, Nb₂SnC, Zr₂PbC and Ti₂PbC. Only three 312 compounds are known, and these are Ti₃AlC₂ Ti₃GeC₂ and Ti₃SiC₂. Two 413 compounds are known, namely Ti₄AlN₃ and Ti₄SiC₃.

The Mₙ₊₁AXₙ compounds can be in ternary, quaternary or higher phases. Ternary phases have three elements, for example Ti₃SiC₂, quaternary phases have four elements, for example Ti₂AlN₀.₅C₀.₅, etc. Elastically, thermally, chemically, electrically the higher phases share many attributes of the binary phases.

The nanocomposite comprises at least one M-X and M-A-X nanocrystal and amorphous regions with at least one of the M, A and X elements in one or more phases of M-A, A-X, M-A-X or X.

In one embodiment, the nanocomposite comprises individual regions of single elements, binary phases, ternary phases or higher order phases of carbide and nitride.

Nanocomposite thin films of the above kind has been characterized and evaluated for use as corrosion protective coating for a fuel cell bipolar plate. In one comparative case, not within the scope of the claims, a multielement material 3Cr:1 Si:2C was used. Coatings of this material were PVD deposited by sputtering on stainless steel SS2348 substrate plates. One sample was sputtered under external heating at a temperature above a temperature caused by heating resulting from sputtering, another sample was sputtered without such external heating, i.e. at temperatures caused by the plasma.

The samples were investigated by x-ray diffractogram (XRD) and it was found that the coatings were x-ray amorphous. It should however be noted that structures smaller than 5 nm cannot be detected by the XRD. The contact resistance was found to be about three times higher for the sample with the film deposited without heating compared to the sample deposited with external heating, however, the resistivity was slightly higher for the sample deposited with heating. The contact resistance and the resistivity were found to be consistent with and in the same order as previously has been reported for Ti-Si-C on electrical contacts. Also the non-correlation between contact resistance and resistivity is consistent with previous investigations of Ti-Si-C coatings for contacts, where a similar behavior has been reported and explained by that the surface morphology has higher influence on the contact resistance than the film resistivity.

A three-electrode-cell was used to evaluate the corrosive behavior of the film on the substrate. The electrodes used were a working electrode (WE) being the sample to be evaluated, a counter electrode (CE) of graphite or platinum and a reference electrode (RE) of silver/silver chloride. The electrolyte was a 0.5 molar sulfuric acid (H₂SO₄). A voltage was applied over the WE and RE and the resulting current between WE and CE was measured. Two measurements where carried out, one potentiodynamic and one potentiostatic and compared to an uncoated stainless steel substrate. In the potentiodynamic measurement, the potential between WE and RE was swept from -500 mV to 1500 mV (SSC) and the current between WE and CE was measured. In the potentiostatic measurement a fixed potential was applied over the WE and the RE and the resulting current was measured over the WE and the CE.

In the potentiodynamic measurement it was found that the free corrosion potential of the Cr-Si-C film was higher than of the uncoated substrate. One conclusion is thus that the nobleness for Cr-Si-C coated stainless steel is higher than of uncoated stainless steel. In this respect there were no substantial difference between the films that were deposited at different temperatures.

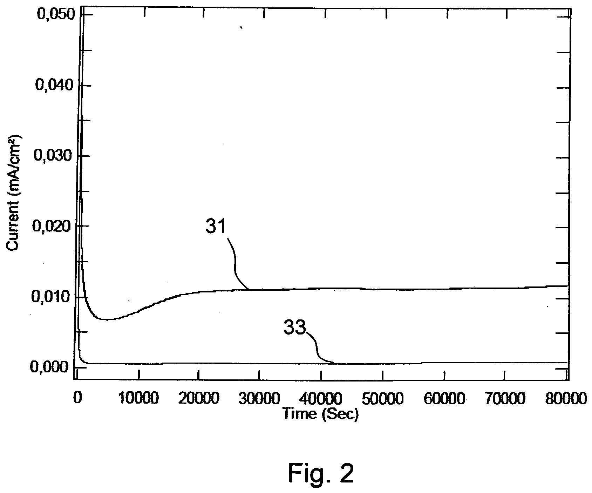

Fig. 2 shows an example of a measurement curve from the potentiostatic measurement. To generate the curves +0.8 V SHE (standard hydrogen electrode) was applied for about 24 h. The lower curve 33 represents the sample coated at elevated temperature and the upper curve 31 uncoated stainless steel. It can be seen that the current after 24 h was about 20 times higher for the uncoated sample, which indicates significantly less corrosion in the case of Cr-Si-C coated stainless steel. After exposure in the corrosive environment the samples were investigated by XPS (X-ray Photoelectron Spectroscopy). Corrosion products were clearly visible on the uncoated stainless steel substrate but not on the Cr-Si-C coated stainless steel substrate.

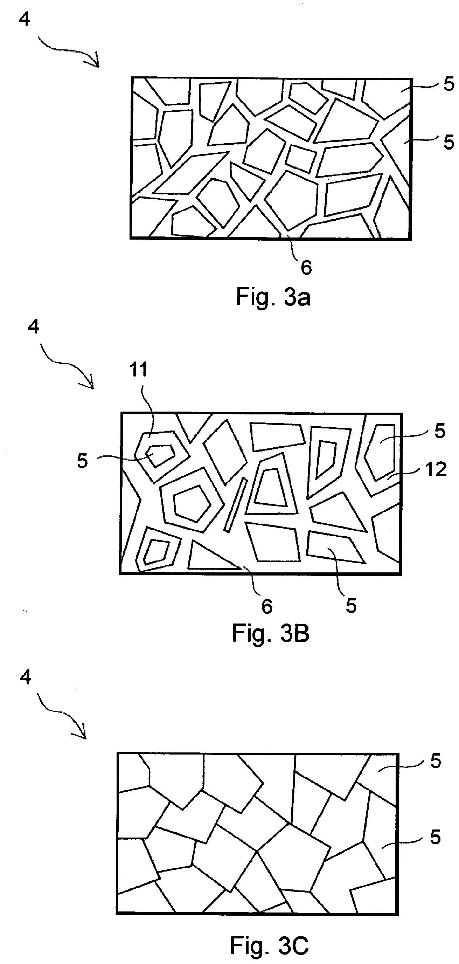

In one embodiment, the multielement material has a structure according to Fig. 3a, comprising a nanocomposite 4 made up of nanocrystals 5 mixed with amorphous regions 6. The nanocrystals 5 may all be of the same phase or of different phases.

In an alternative embodiment, the multielement material has a structure according to Fig. 3b, comprising a nanocomposite 4 made up of amorphous regions 6 mixed with nanocrystals 5 of which some are surrounded by amorphous layers 11 or nanocrystalline layers 12.

In yet another alternative embodiment, not within the scope of the claims, the multielement material has a structure according to Fig. 3c, comprising a nanocomposite 4 made up of nanocrystalline regions 5.

The thickness of the coating is typically within the range of about 0.001 µm to about 1,000 µm, but preferably about 0.001 µm - 5 µm.

In other embodiments, the nanocrystals may be coated by a thin film consisting of another phase.

The distribution between nanocrystals and amorphous regions may be different than exemplified above. The nanocomposite may, in embodiments outside the scope of the present claims, be more or less entirely crystalline or more or less entirely amorphous.

It may also be conceivable to form a separate film of the multielement material and the nanocomposite.

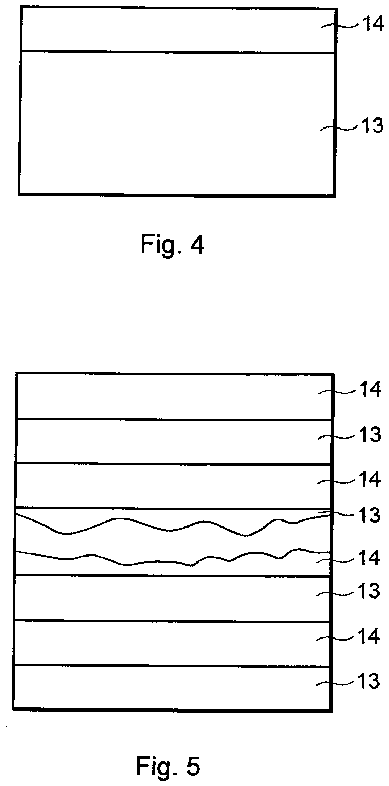

In one embodiment, a multielement material layer 13 of the coating may be coated with a thin metallic layer 14, as illustrated by Fig. 4. Preferably the metal layer is provided such that the surface of the contact layer is metallic, preferably a noble metal or alloy thereof. In another embodiment, the coating 29 may be a sandwich construction with alternating metal layers 14 and multielement material layers 13, as illustrated by Fig. 5, i.e. multielement material layers 13 are laminated with metal layers 14 in a multilayer structure, typically in a repeated structure as shown in the figure.

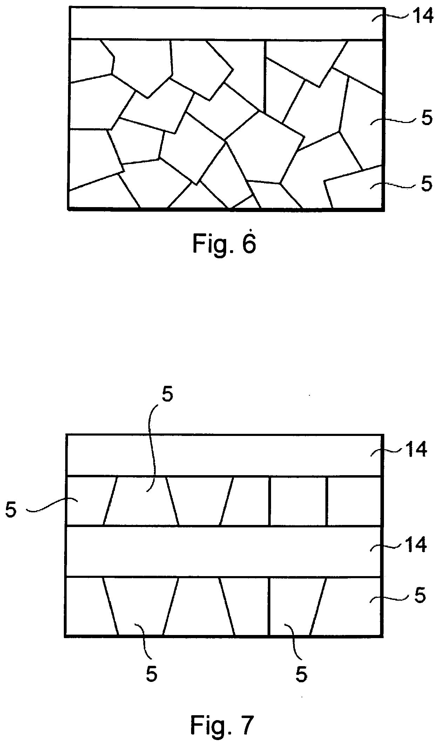

In yet another embodiment, the coating 29 may comprise a multielement material layer comprising regions in a nanocrystalline state 5, which may be coated with a thin metal layer 14, as illustrated in Fig. 6

In yet another embodiment, the coating 29 may comprise a multielement layer comprising regions in a nanocrystalline state 5 and such multielement layers may be laminated with metallic layers in a repeated structure, as shown in Fig. 7.

The metal is preferably gold, silver, palladium, platinum, rhodium, iridium, rhenium, ruthenium, molybdenum, tungsten, nickel or an alloy with at least one of these metals, but other metals may also be useful.

In other embodiments, metallic layers may be used, i.e. a layer that is not necessarily a "pure" metal. Metallic layers of interest include metal composites, where the composite can be an oxide, carbide, nitride or boride. The composite may comprise a polymer, an organic material or a ceramic material such as an oxide, carbide, nitride or boride.

It is also possible to use an alloy of the multielement material comprising M, A and X elements and one or more metals. The alloyed material may be completely dissolved or may be present in the form of precipitates. The metal used should be a non-carbide forming metal. Preferably, 0-30 % metal is added.

The thickness of a metallic layer of the above type, i.e. including metal layers, is preferably in the range of a fraction of an atomic layer to 1000 µm, but is preferably in the range of a fraction of an atomic layer to 5 µm. For example, the range may be from 1 nm to 1000 µm.

An above mentioned metallic layer may cover grains or regions of the multielement material. The total thickness of a combination of metallic layer(s) and layer(s) of multielement material is typically in the range 0.001 µm to 1000 µm.

The multielement material may contain a surplus of carbon, such as in the form of a compound with the formula Tiₙ₊₁SiCₙ+Cₘ. The free carbon elements are transported to the surface of the coating and improve electrical contact, while at the same time protecting the surface against oxidation.

Similar kinds of doping of the contact layer for improvement of properties such as corrosion resistance, thermal properties, mechanical and/or electrical properties, may involve one or a combination of compounds any of a list: a single group A element, a combination of group A elements, X is carbon, X is nitrogen, X is both carbon and nitrogen, a nanocomposite of M-X, nanocrystals and/or amorphous regions with M, A, X elements in one or several phases, such as M-A, A-X, M-A-X.

The coating may be doped by any one, or a combination of the following: Au, Re, Pd, Rh, Ir, Mo, W, Ag, Pt, Cu, Sn, Ni, Ta, Nb, Zr and Hf. To in particular improve corrosion resistant properties, any one of Au, Ag, Pt, Cu, Cr, Ni and Ni may be involved in the doping.

In one embodiment, the contact layer comprises at least one single element M, A, X in the corresponding Mₙ₊₁AXₙ compound within a range of 0-50% by weight. In other embodiments the range may be about 0-60% by weight, about 0-70% by weight or even about 0-80% by weight.

The multielement material described above may advantageously be used for corrosion protection of bipolar plates 23 for fuel cells 27, for example by being provided as a protective coating 29, or as a part of such coating. It should be understood that it may also be possible with a bipolar plate 23 where the substrate 28 comprises or even consists of the multielement material, with or without there being a coating on the substrate.

The coating 29 is deposited on substrate 28 by physical vapour deposition (PVD), e.g. using the method described in Applicant's European patent EP1563116. The coating may also be deposited electrochemically, by electroless deposition or by plasma spraying.

External heating may be used during deposition, i.e. deposition at a temperature above a temperature caused by heating resulting from the deposition method, such as PVD. External heating during deposition of the coating typically means deposition temperatures at about 150-400°C.

The sputtering method for providing the coating 29 may advantageously be High Power Impulse Magnetron Sputtering (HIPIMS), which in the art also is known as High Impact Power Magnetron Sputtering and High Power Pulsed Magnetron Sputtering (HPPMS). In conventional dc magnetron sputtering the power density is limited by the thermal load on the target, since most of the energy of the positive ions accelerated to the target is transformed into heat. In unipolar pulsing the power supply operates at low (or zero) power level and then pulses to a significantly higher level for a short period each cycle. When the peak power densities exceed approximately 1 kW/cm2, the process is typically referred to as HIPIMS. The peak power density is generally in the range 1-3 kW/cm² at peak target voltage in the range 300-1500 V. Advantages with this sputtering technique for providing the coating 29 for corrosion protection of a bipolar plate is that the thickness homogeneity of the deposited film can be improved compared to e.g conventional dc magnetron sputtering and that quality of the film can be improved disregard the comparatively complex geometry of a bipolar plate 23 with flow channels 25 etc. The geometrical design of the bipolar plate 23, in particular regarding the flow channels 25, are often crucial for the efficiency of the fuel cell. Since a desired bipolar plate geometry typically is achieved by design and shaping of an uncoated substrate 28, it is typically desirable that the coating has as little effect as possible on the geometry. Also, improved thickness homogeneity means less risk of weak spots in the coating and thus less risk for corrosion. HIPIMS typically also improve adhesion compared to more conventional sputtering methods. In one embodiment a first sublayer of the coating 29 is being deposited on the substrate by HIPIMS and then a second sublayer is being deposited by conventional DC-sputtering, or some other PVD method, on the HIPIMS deposited first sublayer, the two sublayers forming the coating 29. This has the advantage that a dense micostructure layer provided by HIPIMS can be continued by more conventional DC-sputtering, but at a higher deposition rate. Thus a dense coating can be provided at comparatively high rate.

Typically the complete surface of the substrate 28 is coated with the coating 29, however, it is understood that it is sufficient to cover portions of the substrate surface that can or will be exposed for corrosive environment. It should also be understood that there may be improvements even in the case of incomplete coating of corrosion exposed surface portions of the substrate 28, although such incomplete coating coverage, of course, is typically not desirable.

Although the entry point to the above was to corrosion protect a bipolar plate of a fuel cell, the results may as well be applicable to a more general case, namely a coating for an electrode in an electrochemical cell, i.e. in a similar environment as in a fuel cell and which environment is more corrosive than under normal circumstances, i.e. more corrosive than e.g. outdoor exposure to air and moist. Other types of electrochemical cells include e.g. batteries. In the more generalized case the bipolar plate according to the above may thus be considered to be the electrode and the fuel cell be considered to be the electrochemical cell.

The drawings and the foregoing description are to be considered exemplary and not restrictive. The invention is not limited to the disclosed embodiments.

Occurrence of features in different dependent claims does not exclude a combination of these features.

## Claims

1. An electrochemical cell electrode (23), comprising
an electrically conductive substrate (28) and
an electrically conductive corrosion resistant coating (29) formed on and at least partially covering said conducting substrate (28),
wherein said coating (29) comprises a multielement material having a composition of at least one of a carbide or nitride described by the formula M_{q}A_{y}X_{z}, where M is a transition metal or a combination of transition metals, X is carbon or nitrogen or both, A is a group A element or a combination of group A elements and z, q and y are numbers above zero, wherein
- M is titanium, X is carbon and A is at least one of silicon, germanium or tin, or
- M is nickel, A is silicon and X is carbon, or
- M_{q}A_{y}X_{z} corresponds to Ti₂AlC, Ti₂AlN, Hf₂PbC, Nb₂AlC, (NbTi)₂AlC, Ti₂AlN₀,₅C₀,₅, Ti₂GeC, Zr₂SnC, Ta₂GaC, Hf₂SnC, Ti₂SnC, Nb₂SnC, Zr₂PbC, Ti₂PbC, Ti₃AlC₂ Ti₃GeC₂, Ti₃SiC₂, Ti4AlN₃, or Ti₄SiC₃,
**characterized in that** that the multielement material has a structure comprising a nanocomposite (4) made up of at least one nanocrystal (5) chosen from M-X and M-A-X mixed with amorphous regions (6) with at least one of the M, A and X elements in one or more phases chosen from the group consisting of M-A, A-X, M-A-X, and X.

2. The electrode as claimed in claim 1, wherein the coating comprises a metallic layer or metal composite layer (14), preferably the multielement material (13) is coated by the metallic layer or metal composite layer (14) such that the coating (29) surface is metallic, and/or preferably the multielement material (13) is laminated with metallic layers or metal composite layers (14) in a multilayer structure.

3. The electrode as claimed in claim 2, wherein the metallic layer (14) is any of Au, Ag, Pd, Pt, Rh, Ir, Re, Ru, Mo, W, Ni or an alloy with at least one of any of the aforementioned metals.

4. The electrode as claimed in claim 2, wherein the metal composite layer (14) is any metal composite where the composite can be an oxide, carbide, nitride or boride, and/or the metal composite (14) is any metal composite, the composite comprising a polymer, an organic material or a ceramic material such as an oxide, carbide, nitride or boride.

5. The electrode as claimed in any one of the preceding claims, wherein the electrode is a bipolar plate and the electrochemical cell is a fuel cell.

6. The electrode as claimed in any one of the preceding claims, wherein the electrically conducting substrate (28) comprises a metal, preferably at least one of the following: stainless steel, aluminum and nickel, or an alloy thereof.

7. An electrochemical cell, preferably a fuel cell, comprising the electrode according to any one of the preceding claims.

8. A method in manufacturing of an electrochemical cell electrode (23), according to any one of claims 1-6, said method comprising the steps of:
providing the electrically conducting substrate (28) and
forming the electrically conductive corrosion resistant coating (29) by Physical Vapor Deposition (PVD) on said conducting substrate so that said conducting substrate become at least partially covered by said coating.

9. The method as claimed in claim 8, wherein the coating (29) formed by PVD, preferably is made by sputtering, and/or the coating (29) is at least partially being formed by High Power Impulse Magnetron Sputtering (HIPIMS), wherein the coating (29) preferably is being formed by forming a first sublayer on the substrate by HIPIMS and then forming a second sublayer on the first sublayer by another PVD method.

## Patentansprüche

1. Elektrochemische Zellenelektrode (23), umfassend
ein elektrisch leitfähiges Substrat (28) und
eine elektrisch leitfähige Korrosionsschutzbeschichtung (29), die an dem leitfähigen Substrat (28) gebildet ist und es mindestens teilweise bedeckt,
wobei die Beschichtung (29) ein Multielementmaterial umfasst, das eine Zusammensetzung aus mindestens einem von einem Karbid oder Nitrid aufweist, das durch die Formel M_{q}A_{y}X_{z} beschrieben wird, wo M ein Übergangsmetall oder eine Kombination von Übergangsmetallen ist, X Kohlenstoff oder Stickstoff oder beides ist, A ein Element von Gruppe A oder eine Kombination von Elementen von Gruppe A ist und z, q und y Zahlen über null sind, wobei
- M Titan ist, X Kohlenstoff ist und A mindestens eines von Silizium, Germanium oder Zinn ist, oder
- M Nickel ist, A Silizium und X Kohlenstoff ist, oder
- M_{q}A_{y}X_{z} Ti₂AlC, Ti₂AlN, Hf₂PbC, Nb₂AlC, (NbTi)₂AlC, Ti₂AlN₀,₅C₀,₅, Ti₂GeC, Zr₂SnC, Ta₂GaC, Hf₂SnC, Ti₂SnC, Nb₂SnC, Zr₂PbC, Ti₂PbC, Ti₃AlC₂ Ti₃GeC₂, Ti₃SiC₂, Ti₄AlN₃ oder Ti₄SiC₃ entspricht,
**dadurch gekennzeichnet, dass** das Multielementmaterial eine Struktur aufweist, die ein Nanokomposit (4) umfasst, das aus mindestens einem Nanokristall (5) gebildet ist, der aus M-X und M-A-X gemischt mit amorphen Bereichen (6) ausgewählt ist, wobei mindestens eines der M, A und X Elemente in einer oder mehreren Phasen aus der Gruppe bestehend aus M-A, A-X, M-A-X und X ausgewählt ist.

2. Elektrode nach Anspruch 1, wobei die Beschichtung eine metallische Schicht oder Metallkompositschicht (14) umfasst, bevorzugt das Multielementmaterial (13) von der metallischen Schicht oder Metallkompositschicht (14) bedeckt ist, sodass die Beschichtungs- (29) -oberfläche metallisch ist und/oder bevorzugt das Multielementmaterial (13) mit metallischen Schichten oder Metallkompositschichten (14) in einer Multischichtstruktur laminiert ist.

3. Elektrode nach Anspruch 2, wobei die Metallschicht (14) eines von Au, Ag, Pd, Pt, Rh, Ir, Re, Ru, Mo, W, Ni oder eine Legierung mit mindestens einem von irgendeinem der zuvor erwähnten Metalle ist.

4. Elektrode nach Anspruch 2, wobei die Metallkompositschicht (14) irgendein Metallkomposit ist, wo das Komposit ein Oxid, Karbid, Nitrid oder Borid ist und/oder das Metallkomposit (14) irgendein Metallkomposit ist, wobei das Komposit ein Polymer, ein organisches Material oder ein Keramikmaterial, wie ein Oxid, Karbid, Nitrid oder Borid umfasst.

5. Elektrode nach einem der vorstehenden Ansprüche, wobei die Elektrode eine bipolare Platte ist und die elektrochemische Zelle eine Brennstoffzelle ist.

6. Elektrode nach einem der vorstehenden Ansprüche, wobei das elektrisch leitende Substrat (28) ein Metall umfasst, bevorzugt mindestens eines der folgenden: Edelstahl, Aluminium und Nickel oder eine Legierung davon.

7. Elektrochemische Zelle, bevorzugt eine Brennstoffzelle, umfassend die Elektrode nach einem der vorstehenden Ansprüche.

8. Verfahren in einer Herstellung einer elektrochemischen Zellenelektrode (23) nach einem der Ansprüche 1-6, das Verfahren umfassend die Schritte zum:
Bereitstellen des elektrisch leitenden Substrats (28) und
Bilden der elektrisch leitfähigen Korrosionsschutzbeschichtung (29) durch physikalische Gasphasenabscheidung (PVD) auf dem leitenden Substrat, sodass das leitende Substrat mindestens teilweise von der Beschichtung bedeckt ist.

9. Verfahren nach Anspruch 8, wobei die Beschichtung (29), die durch PVD gebildet ist, bevorzugt durch Sputtern gefertigt wird und/oder die Beschichtung (29) mindestens teilweise durch Hochleistungsimpulsmagnetronsputtern (HIPIMS) gebildet wird, wobei die Beschichtung (29) bevorzugt durch Bilden einer ersten Subschicht auf dem Substrat durch HIPIMS und dann Bilden einer zweiten Subschicht auf der ersten Subschicht durch ein weiteres PVD-Verfahren gebildet wird.

## Revendications

1. Electrode de cellule électrochimique (23), comprenant
un substrat électro-conducteur (28) et
un revêtement (29) résistant à la corrosion électro-conducteur formé sur et recouvrant au moins en partie ledit substrat conducteur (28),
dans laquelle ledit revêtement (29) comprend un matériau à éléments multiples présentant une composition d'au moins un parmi un carbure ou nitrure décrit par la formule M_{q}A_{y}X_{z}, où M est un métal de transition ou une combinaison de métaux de transition, X est carbone ou azote ou les deux, A est un élément de groupe A ou une combinaison d'éléments de groupe A et z, q et y sont des nombres supérieurs à zéro, dans laquelle
- M est titane, X est carbone et A est au moins un parmi silicium, germanium ou étain, ou
- M est nickel, A est silicium et X est carbone, ou
- M_{q}A_{y}X_{z} correspond à Ti₂AlC, Ti₂AlN, Hf₂Pbc, Nb₂AlC, (NbTi)₂AlC, Ti₂AlN₀,₅C₀,₅, Ti₂GeC, Zr₂SnC, Ta₂GaC, Hf₂SnC, Ti₂SnC, Nb₂SnC, Zr₂PbC, Ti₂PbC, Ti₃AlC₂ Ti₃GeC₂, Ti₃SiC₂, Ti₄AlN₃, ou Ti₄SiC₃,
**caractérisée en ce que** le matériau à éléments multiples présente une structure comprenant un nanocomposite (4) composé d'au moins un nanocristal (5) choisi parmi M-X et M-A-X mélangé à des régions amorphes (6) avec au moins un des éléments M, A et X dans une ou plusieurs phases choisies parmi le groupe constitué de M-A, A-X, M-A-X, et X.

2. Electrode selon la revendication 1, dans laquelle le revêtement comprend une couche métallique ou couche composite métallique (14), de préférence le matériau à éléments multiples (13) est revêtu par la couche métallique ou couche composite métallique (14), de telle sorte que la surface du revêtement (29) est métallique, et/ou de préférence le matériau à éléments multiples (13) est stratifié avec des couches métalliques ou des couches composites métalliques (14) dans une structure multicouche.

3. Electrode selon la revendication 2, dans laquelle la couche métallique (14) est l'une quelconque parmi Au, Ag, Pd, Pt, Rh, Ir, Re, Ru, Mo, W, Ni ou un alliage avec au moins l'un quelconque parmi les métaux précédemment mentionnés.

4. Electrode selon la revendication 2, dans laquelle la couche composite métallique (14) est un composite métallique quelconque où le composite peut être un oxyde, carbure, nitrure ou borure, et/ou le composite métallique (14) est un composite métallique quelconque, le composite comprenant un polymère, un matériau organique ou un matériau céramique tel qu'un oxyde, carbure, nitrure ou borure.

5. Electrode selon l'une quelconque des revendications précédentes, dans laquelle l'électrode est une plaque bipolaire et la cellule électrochimique est une pile à combustible.

6. Electrode selon l'une quelconque des revendications précédentes, dans laquelle le substrat électro-conducteur (28) comprend un métal, de préférence au moins un parmi les suivants : acier inoxydable, aluminium et nickel, ou un alliage de ceux-ci.

7. Cellule électrochimique, de préférence pile à combustible, comprenant l'électrode selon l'une quelconque des revendications précédentes.

8. Procédé de fabrication d'une électrode de cellule électrochimique (23), selon l'une quelconque des revendications 1 à 6, ledit procédé comprenant les étapes de :
fourniture du substrat électro-conducteur (28) et
formation du revêtement (29) résistant à la corrosion électro-conducteur par dépôt physique en phase vapeur (PVD) sur ledit substrat conducteur de sorte que ledit substrat conducteur devient au moins en partie revêtu par ledit revêtement.

9. Procédé selon la revendication 8, dans lequel le revêtement (29) formé par PVD, est de préférence fabriqué par pulvérisation cathodique, et/ou le revêtement (29) est au moins en partie formé par pulvérisation cathodique magnétron à impulsions haute puissance (HIPIMS), dans lequel le revêtement (29) est de préférence formé par formation d'une première sous-couche sur le substrat par HIPIMS puis formation d'une deuxième sous-couche sur la première sous-couche par un autre procédé PVD.
